# EUROPEAN PATENT SPECIFICATION

(11) **EP 2 092 521 B1**
(45) Date of publication and mention of the grant of the patent: **09.02.2011**
(21) Application number: 07857324.3
(22) Date of filing: 10.12.2007
(51) Int. Cl.: G11B 7/007, G11B 7/24

(54) **OPTICAL STORAGE MEDIUM AND RESPECTIVE APPARATUS FOR RECORDING AND/OR READING DATA**
OPTISCHES SPEICHERMEDIUM UND ENTSPRECHENDE VORRICHTUNG ZUM AUFZEICHNEN UND/ODER LESEN VON DATEN
SUPPORT DE STOCKAGE OPTIQUE ET APPAREIL RESPECTIF POUR ENREGISTRER ET/OU LIRE DES DONNÉES

(30) Priority: 15.12.2006 EP 06126258
(43) Date of publication of application: 26.08.2009
(73) Proprietor: Thomson Licensing, 92130 Issy-les-Moulineaux (FR)
(72) Inventor: PILARD, Gael, 78087 Moenchweiler (DE)
(74) Representative: Arnold, Klaus-Peter
(86) International application number: PCT/EP2007/063603
(87) International publication number: WO 2008/071654

(56) References cited:
- EP-A1- 0 343 727
- WO-A-2005/064601
- US-A- 5 817 389
- US-A1- 2005 254 408

## Description

### TECHNICAL FIELD OF THE INVENTION

The present invention relates to an optical storage medium, in particular an optical disc, which uses a super resolution near field structure effect for storing data with a high data density in a read-only region, and further to an apparatus for recording and/or reading data from the storage medium.

### BACKGROUND OF THE INVENTION

Optical storage media are media in which data are stored in an optically readable manner, for example by means of a laser beam, and a photo-detector integrated with the laser within.a pickup is used for detecting the reflected light of the laser beam when reading the data. In the meanwhile a large variety of optical storage media are known, which are operated with different laser wavelength, and which have different sizes for providing storage capacities from below one Gigabyte up to 50 Gigabyte (GB). The formats include read-only formats such as Audio CD and Video DVD, write-once optical media such as CD-R and DVD-R, DVD+R as well as rewritable formats like CD-RW, DVD-RW, DVD+RW and DVD-RAM for example. Digital data are stored on these media along tracks in one or more layers of the media.

The storage medium with the highest data capacity is at present the Blu-Ray disc (BD), which allows to store 50 GB on a dual layer disc. Available formats are at present read-only BD-ROM, re-writable BD-RE and write once BD-R discs. For reading and writing of a Blu-Ray disc an optical pickup with a laser wavelength of 405 nm is used. On the Blu-Ray disc a track pitch of 320 nm and a mark length from 2T to 8T + 9T is used, where T is the channel bit length, and which corresponds with a minimum mark length of 138 - 160 nm. The re-writable BD-RE disc is based on a phase change technology comprising a phase change layer, which uses for example a compound of AgInSbTe or GeSbTe. Further information about the Blu-Ray disc system is available for example from the Blu-Ray group via internet: www.blu-raydisc.com.

New optical storage media with a super resolution near-field structure (Super-RENS) offer the possibility to increase the data density of the optical storage medium by a factor of four in one dimension in comparison with the Blu-Ray disc. This is possible by a so-called Super-RENS structure or layer, which is placed above an data layer of the optical storage medium, and which significantly reduces the effective size of a light spot used for reading from or writing to the optical storage medium. The super resolution layer is also called a mask layer because it is arranged above the data layer and only the high intensity center part of a laser beam can penetrate the mask layer.

The Super-RENS effect allows to record and read data stored in marks of an optical disc, which have a size below the resolution limit of a laser beam used for reading or writing the data on the disc. As known, the diffraction limit of the resolution of the laser beam is about lambda/(2x NA), where lambda is the wavelength and NA the numerical aperture of the objective lens of the optical pickup.

A Super-RENS optical disc comprising a super resolution near-field structure formed of a metal oxide or a polymer compound and a phase change layer formed of a GeSbTe or a AgInSbTe based phase change material for recording of data and reproducing of data is known from WO 2005/081242 and US 2004/0257968. Further examples of super-resolution optical media are described in WO 2004/032123 and by Tominaga et al., Appl. Phys. Lett. Vol. 73, No. 15, 12 October 1998.

For replicated DVDs it is known to write an individual code in a defined region of an inner lead-in area, known as a burst cutting area (BCA), as described in Annex K of the DVD physical specification. The BCA is created by a very powerful laser, for example by a ND:YAG or CO2 laser, which burns and darkens the aluminum or other reflective metal layer in the respective inner area of the prerecorded DVD. The marks created by this method are stripes, roughly 10 microns wide by 1200 microns long and provide a code in the form of a barcode, which contains up to 188 bytes.

DVD players can read the BCA code by rotating at a constant angular velocity (1440 rpm), moving the optical pick-up to the BCA area, focusing on the data surface, and using a special decoding circuit for decoding the much lower frequency barcode signal, as compared with the normal DVD HF data signal. A specific code in the burst cutting area can be used for copy protection or serialization systems.

US 2005/0254408 discloses an optical disc comprising a mask layer for providing a super-resolution effect, wherein for the mask layer in particular an inorganic phase change material is used. Read-only optical discs and recordable optical discs are described, which comprise each a mask layer with a super-resolution material and a recording layer.

US 5,817,389 describes an optical disc having at least two information recording layers and a transmitting varying layer made of a phase change material, for providing an increased data capacity. The transmittance varying layer is utilized as a mask layer for providing information reproduction with super high resolution. The read-only optical disc has a plurality of information recording layers of which at least one includes a transmittance varying layer, to store larger user data as compared with other multilayer optical discs.

EP-A-0343727 describes an optical disc including a non-linear layer for increasing the resolution of a laser beam both during reading and during writing, by reducing the size of the effective scanning spot of the laser beam. Read-only optical discs, write once optical discs and optical discs which can be inscribed and erased several times are disclosed. A special embodiment describes an optical disc comprising a layer with phase change material as the non-linear material, which layer of non-linear optical material is also the information layer.

### BRIEF SUMMARY OF THE INVENTION

The optical storage medium according to the invention comprises a read-only region and a recordable region. The read-only region includes at least a substrate layer, a data layer, and a mask layer formed for providing a super resolution near field effect, which layers are arranged as a stack of layers. The recordable region comprises at least a layer with a tracking structure for providing a tracking information for a pickup and the mask layer as provided for the read-only region, and which layer covers the layer with the tracking structure for using the mask layer as the data layer of the recordable region. The tracking structure of the recordable region is designed for writing data with a data density, which is lower than the data density of the read-only region. The mask layer comprises a phase change material for providing the super resolution near field effect, wherein the optical storage medium is an optical disc and the recordable region is a reserved area of the optical disc.

The optical storage medium is in particular an optical disc, and in a preferred embodiment, the recordable region is an inner region of the optical disc, for example a reserved area, which does not contain any read-only data. An optical disc of this kind gives therefore a user the possibility, to write any user specific data onto an optical disc comprising read-only data (ROM disc).

The apparatus for recording and/or reading data from the optical disc comprises the features of claim 8.

The optical storage medium is in a preferred embodiment a Super-RENS ROM disc which comprises a tracking structure in the recordable region having a groove/land structure or a pressed pit structure for providing the tracking information, and the track pitch of the tracking structure is in correspondence with the track pitch of the Blu-ray disc system. The track pitch of the data layer of the read-only region is advantageously also in accordance with the Blu-ray disc system for reading the data of the data layer with a Blu-ray system pickup by utilizing a Super-RENS effect.

### BRIEF DESCRIPTION OF THE DRAWINGS

Preferred embodiments of the invention are explained now in more detail below by way of example with reference to a schematic drawing, which shows:
- Figure: A part of an optical storage medium comprising a ROM data layer and a super resolution mask layer in a cross section.

### DETAILED DESCRIPTION OF PREFERRED EMBODIMENTS

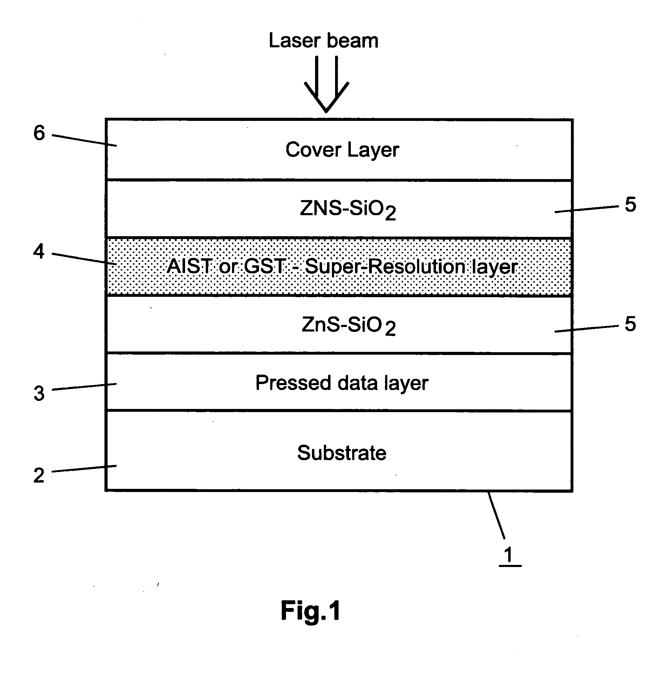

The storage medium 1 shown in the figure, an optical disc in this embodiment, comprises a first, a read-only region with a substrate layer 2, for example a polycarbonate layer, which represents the base layer, on which an data layer 3 is arranged. The data layer 3, a pressed data layer, comprises read-only (ROM) data, which layer is arranged as an embossed pit structure with a reflective metal coating for example. Above the data layer 3 a mask layer 4 is arranged, which comprises a phase change material for providing a super resolution near field effect. As a phase change material for example a compound of AgInSbTe or GeSbTe can be used. The figure shows the optical disc 1 in a cross section of the first region.

Below and above the mask layer 4 advantageously protection layers 5 are arranged, which comprise for example the materials zinc sulfide and silicon dioxide: ZnS-SiO₂. These layers 2 - 5 are arranged as a stack and are covered by a cover layer 6 for a protection of the optical disc 1. For reading the data of the data layer 3, a laser beam is applied from the top of the figure, penetrating first the cover layer 6.

The optical disc 1 comprises further a second region, a recordable region, and a layer with a tracking structure for providing a tracking information for an optical pickup, not shown in the figure. The layer with the tracking structure is also covered by the mask layer 4. Because the mask layer 4 comprises a phase change material, this layer is applied and used in the second region as a recordable data layer. The rewritable region is a reserved area of the optical disc 1, for example an inner region. The tracking structure comprises in particular a groove/land structure or a pressed pit structure for providing the tracking information. The rewritable region may comprise in particular also a layer structure as used for a recordable Blu-Ray disc (BD-RE disc).

The read-only region of the optical disc 1 is for example a Super-RENS ROM type disc being designed for reading data with a Blu-ray type pickup for reading of the ROM data. The data density of the data layer 3 can be arranged therefore with an data density being at least by a factor of three or four higher than present Blu-Ray discs.

For providing a super resolution near field effect of present phase change materials, for example AgInSbTe or GeSbTe, a laser power of about 1 Milli-Watt (mW), in particular in the range of 0,1 - 5 mW, depending on the rotational speed of the optical disc, is sufficient when using a blue laser diode of 405 nm. Therefore, the same phase change layer can be used for the optical storage medium, which is applied in the read-only region as a mask layer for the data layer, for an application in the recordable region of the optical storage medium as the data layer. For both regions advantageously a pick-up using the same laser wavelength, in particular a blue laser with a wavelength of 405 nm, can be used.

It is known that locations of phase change materials of this kind mentioned above remain in a crystalline phase, when illuminated with a laser power as required for providing the super resolution near field effect. Therefore, with a slightly higher laser power, e.g. 1 - 5 mW, also a data track can be written on the phase change material being arranged in the recordable region of the optical storage medium in form of amorphous marks.

The read-only region of the optical storage medium may have for example specific pressed pits providing the data information of the data layer, which has a track pitch, which is utilized also for the tracking structure of the recordable region. In particular, a track pitch of 320 nm in accordance with the Blu-Ray disc system may used for both the read-only region and the recordable region. The tracking information of the recordable region has to be large enough to be readable and writable without using a super resolution near field effect.

For the read-only region alternatively a groove/land structure may be used for providing the tracking for a pickup, e.g. with a track pitch of 320 nm. This groove/land structure can be used then also for the recordable region as the tracking structure. The mark length of the data which can be written in the recordable region is of course larger than the mark length of the data present in the read-only region, because the super resolution near field effect is not applied in the recordable region. The mark length of the data of the recordable region can be in correspondence with the 2T standard mark length of the Blu-ray disc system for example, or can be larger.

For reading the data in the recordable region, a low laser power has to be used to not destroy the data as included in the phase change layer, in particular a laser power below 1 mW depending on the rotational speed of the optical disc. The laser power for reading the data of the recordable region can correspond for example with a laser power as used for present BD-RE discs. In particular, the pickup unit may use a laser power in a range of 0,5 - 5 mW for reading the data of the read-only region, in a range of 1 - 5 mW for writing data on the recordable region, and a laser power of below 1 mW for reading data in the recordable region, each for single speed disc rotation. The pickup unit may use the same laser power for reading the data of the read-only region and for writing data on the recordable region.

In a further aspect of the invention, the phase change material of the read-only region may be utilized for writing additional data onto the mask layer 4. The track pitch of the read-only data layer then has to be in the range of 320 nm, or larger. Here, also a Blu-Ray pickup unit can be used for writing the data, when marks with a mark length in accordance with a BD-RE are used for writing the data. Of course this information is lost when the pickup unit reads the read-only data of the data layer, but writing additional data on the mask layer 4 could be an interesting feature for a user for providing individual labels for special parts of the read-only region. For example, a user may use such a label for the last viewed sequence of a film, which label is retained when the disc is changed, and which allows the user to find quickly the location where he wants to continue the movie.

An apparatus for recording and/or reading data from an optical storage disc 1 comprises a pickup unit which provides a light beam with an intensity sufficient for reading data from the read-only region by utilizing a super resolution near field effect, and an intensity being sufficient for recording data on the data layer of the recordable region. For example, the pickup may use a laser light power in a range of 0,5 - 5 mW for reading the data of the read-only region, a laser light power in a range of 1 - 5 mW for writing data on the recordable region, and a laser power below 1 mW for reading data in the recordable region, each for a single speed disc rotation. For this purpose, in particular a pickup unit comprising a Blu-Ray disc pickup in accordance with the Blu-Ray disc system may be used. The pickup uses in particular the same laser wavelength for the read-only region as well as for recordable region.

The apparatus comprises further means for recognizing a read-only region on the optical disc, for which a laser intensity sufficient for utilizing a super resolution near-field effect is provided, and means for recognizing a recordable region on the optical disc, for writing data on the recordable region with a data density, which is lower than the data density of the read-only region. For this reason, control and information bits may be included at the beginning of the read-only region and of the recordable region, or for both regions on an inner track of the optical disc.

The optical storage medium comprising data in a read-only region according to the invention provides therefore the possibility for a user or a manufacturer to store additional data for various applications on the storage medium. Also other embodiments of the invention can be made by a person skilled in the art without departing from the scope of the invention as defined in the appended claims. The invention is in particular not limited for a use with a pickup unit comprising a Blu-Ray disc type pick-up. The invention resides therefore in the claims herein after appended.

## Claims

1. Optical storage medium comprising
a read-only region with a substrate layer (2), a data layer (3), and a mask layer (4) for providing a super resolution near-field effect, arranged as a stack of layers (2-4), and
a recordable region comprising a layer with a tracking structure for providing a tracking information, said tracking structure being covered by said mask layer (4) for using the mask layer (4) as the data layer of the recordable region, said tracking structure being designed for writing data with a data density, which is lower than the data density of the read-only region, wherein
the optical storage medium is an optical disc (1) and the recordable region is a reserved area of the optical disc (1), and
the mask layer (4) of the read-only region and the data layer of the recordable region comprise a phase change material.

2. The optical storage medium of claim 1, **wherein** the data density of the read-only region is below the optical resolution limit of a corresponding optical pick-up, and wherein the data density of the recordable region is above the optical resolution limit of said optical pick-up.

3. The optical storage medium of claim 1 or 2, **wherein** the recordable region is an inner region of the optical disc (1).

4. The optical storage medium of one of the claims 1, 2 or 3, **wherein** the tracking structure of the recordable region comprises a groove/land structure or a pressed pit structure for providing the tracking data, and wherein the track pitch of the tracking structure is in correspondence with the track pitch of the Blu-ray disc system.

5. The optical storage medium of claim 4, wherein the tracking structure comprises a pressed pit structure, and the pit length of the pressed pit structure is in correspondence with or larger than the 2T standard mark length of the Blu-ray disc system.

6. The optical storage medium of one of the claims 3 - 5, wherein the track pitch of the data layer (3) of the read-only region is in accordance with the Blu-ray disc system, for reading the data of the data layer (3) with a Blu-ray pickup by utilizing a Super-RENS effect.

7. The optical storage medium of one of the claims 1 - 6, **wherein** the mask layer (4) of the read-only region and the data layer of the recordable region consist of the same material, and wherein the phase change material is AgInSbTe or GeSbTe.

8. Apparatus for recording and/or reading data from an optical disc in accordance with one of the claims 1 - 7, **wherein** the apparatus comprises
a pickup unit providing a laser beam for reading data from the read-only region with the super resolution near-field layer of the optical storage medium, and using said laser beam for recording and/or reading data on the data layer of the recordable region, and
means for recognizing a read-only region on the optical disc, for which a laser intensity sufficient for utilizing a super resolution near-field effect has to be provided, and
means for recognizing a recordable region on the optical disc, the recordable region comprising a layer with a tracking structure for providing a tracking information, for writing data on the recordable region with a data density, which is lower than the data density of the read-only region.

9. The apparatus of claim 8, **wherein** the pickup unit uses for reading the data of the read-only region a laser light intensity being sufficient for reading data from the read-only region by utilizing a super resolution near-field effect, and uses an intensity being sufficient for recording data on the data layer of the recordable region.

10. The apparatus of claim 8 or 9, **wherein** the pickup unit uses for reading the data of the read-only region a laser light power in a range of 0,5 - 5 mW, uses for writing data on the recordable region a laser light power in a range of 1 - 5 mW, and uses a laser power below 1 mW for reading data in the recordable region, each for single speed disc rotation.

11. The apparatus of claim 8, 9 or 10, **wherein** the pickup unit comprises a Blu-ray disc type pickup in accordance with the Blu-ray disc system, and wherein the pick-up uses the same laser wavelength for both regions.

## Patentansprüche

1. Optisches Speichermedium, das umfasst:
ein Nur-Lese-Gebiet mit einer Substratschicht (2), einer Datenschicht (3) und einer Maskenschicht (4) zur Bereitstellung eines Superauflösungs-Nahfeldeffekts, das als ein Stapel von Schichten (2-4) angeordnet ist, und
ein beschreibbares Gebiet, das eine Schicht mit einer Nachführstruktur zur Bereitstellung von Nachführinformationen umfasst, wobei die Nachführstruktur von der Maskenschicht (4) bedeckt ist, um die Maskenschicht (4) als die Datenschicht des beschreibbaren Gebiets zu verwenden,
wobei die Nachführstruktur für das Schreiben von Daten mit einer Datendichte ausgelegt ist, die niedriger als die Datendichte des Nur-Lese-Gebiets ist, wobei das optische Speichermedium eine optische Platte (1) ist und das beschreibbare Gebiet ein reservierter Bereich der optischen Platte (1) ist, und
die Maskenschicht (4) des Nur-Lese-Gebiets und die Datenschicht des beschreibbaren Gebiets ein Phasenänderungsmaterial umfassen.

2. Optisches Speichermedium nach Anspruch 1, bei dem die Datendichte des Nur-Lese-Gebiets unter der optischen Auflösungsgrenze eines entsprechenden optischen Lesekopfs liegt, und bei dem die Datendichte des beschreibbaren Gebiets über der optischen Auflösungsgrenze des optischen Lesekopfs liegt.

3. Optisches Speichermedium nach Anspruch 1 oder 2, bei dem das beschreibbare Gebiet ein Innengebiet der optischen Platte (1) ist.

4. Optisches Speichermedium nach einem der Ansprüche 1, 2 oder 3, bei dem die Nachführstruktur des beschreibbaren Gebiets eine Rillen/Steg-Struktur oder eine Struktur gepresster Pits zur Bereitstellung der Nachführdaten umfasst, und bei dem der Spurabstand der Nachführstruktur dem Spurabstand des Blu-Ray-Plattensystems entspricht.

5. Optisches Speichermedium nach Anspruch 4, bei dem die Nachführstruktur eine Struktur gepresster Pits umfasst, und bei dem die Pit-Länge der Struktur gepresster Pits der 2T-Standardmarkenlänge des Blu-Ray-Plattensystems entspricht oder größer als diese ist.

6. Optisches Speichermedium nach einem der Ansprüche 3-5, bei dem der Spurabstand der Datenschicht (3) des Nur-Lese-Gebiets dem Blu-Ray-Plattensystem entspricht, um die Daten der Datenschicht (3) unter Nutzung eines Super-RENS-Effekts mit einem Blu-Ray-Lesekopf zu lesen.

7. Optisches Speichermedium nach einem der Ansprüche 1-6, bei dem die Maskenschicht (4) des Nur-Lese-Gebiets und die Datenschicht des beschreibbaren Gebiets aus demselben Material bestehen, und bei dem das Phasenänderungsmaterial AgInSbTe oder GeSbTe ist.

8. Vorrichtung zum Aufzeichnen und/oder zum Lesen von Daten von einer optischen Platte in Übereinstimmung mit einem der Ansprüche 1-7, **bei der** die Vorrichtung umfasst:
eine Lesekopfeinheit, die einen Laserstrahl zum Lesen von Daten von dem Nur-Lese-Gebiet mit der Superauflösungs-Nahfeldschicht des optischen Speichermediums bereitstellt, und die den Laserstrahl zum Aufzeichnen und/oder Lesen von Daten auf der Datenschicht des beschreibbaren Gebiets verwendet, und
Mittel zum Erkennen eines Nur-Lese-Gebiets auf der optischen Platte, für das eine Laserstärke bereitgestellt werden muss, die zur Nutzung eines Superauflösungs-Nahfeldeffekts ausreicht, und
Mittel zum Erkennen eines beschreibbaren Gebiets auf der optischen Platte, wobei das beschreibbare Gebiet eine Schicht mit einer Nachführstruktur zur Bereitstellung von Nachführungsinformationen umfasst, um auf das beschreibbare Gebiet Daten mit einer Datendichte zu schreiben, die niedriger als die Datendichte des Nur-Lese-Gebiets ist.

9. Vorrichtung nach Anspruch 8, **bei der** die Lesekopfeinheit zum Lesen der Daten des Nur-Lese-Gebiets eine Laserlichtstärke verwendet, die zum Lesen von Daten von dem Nur-Lese-Gebiet durch Nutzung eines Superauflösungs-Nahfeldeffekts ausreicht, und eine Stärke verwendet, die zum Aufzeichnen von Daten auf der Datenschicht des beschreibbaren Gebiets ausreicht.

10. Vorrichtung nach Anspruch 8 oder 9, **bei der** die Lesekopfeinheit jeweils für eine Single-Speed-Plattendrehung zum Lesen der Daten des Nur-Lese-Gebiets eine Laserlichtleistung in einem Bereich von 0,5-5 mW verwendet, zum Schreiben von Daten auf das beschreibbare Gebiet eine Laserlichtleistung in einem Bereich von 1-5 mW verwendet und zum Lesen von Daten in dem beschreibbaren Gebiet eine Laserleistung unter 1 mW verwendet.

11. Vorrichtung nach Anspruch 8, 9 oder 10, **bei der** die Lesekopfeinheit einen Lesekopf vom Blu-Ray-Plattentyp in Übereinstimmung mit dem Blu-Ray-Plattensystem umfasst, und bei dem der Lesekopf für beide Gebiete dieselbe Laserwellenlänge verwendet.

## Revendications

1. Support de stockage optique comprenant
une zone de lecture seule comportant une couche de substrat (2), une couche de données (3), et une couche de masque (4) pour fournir un effet de champ proche à super résolution, agencée sous forme de pile de couches (2-4), et
une zone enregistrable comprenant une couche dotée d'une structure de poursuite pour fournir une information de poursuite, ladite structure de poursuite étant couverte par ladite couche de masque (4) pour utiliser la couche de masque (4) en tant que couche de données de la zone enregistrable, ladite structure de poursuite étant conçue pour écrire des données avec une densité de données, laquelle est inférieure à la densité de données de la zone de lecture seule, où
le support de stockage optique est un disque optique (1) et la zone enregistrable est une zone réservée du disque optique (1), et
la couche de masque (4) de la zone de lecture seule et la zone de données de la zone enregistrable comprennent un matériau fusible.

2. Support de stockage optique selon la revendication 1, où la densité de données de la zone de lecture seule est inférieure à la limite de résolution optique d'un capteur optique correspondant, et où la densité de données de la zone enregistrable est supérieure à la limite de résolution optique dudit capteur optique.

3. Support de stockage optique selon la revendication 1 ou 2, où la zone enregistrable est une zone interne du disque optique (1).

4. Support de stockage optique selon une des revendications 1, 2 ou 3, où la structure de poursuite de la zone enregistrable comprend une structure de sillon/méplat ou une structure de creux compacte pour fournir les données de poursuite, et où le pas transversal de la structure de poursuite équivaut au pas transversal du système de disque Blu-ray.

5. Support de stockage optique selon la revendication 4, où la structure de poursuite comprend une structure de creux compacte, et la longueur de creux de la structure de creux compacte équivaut ou est supérieure à la longueur de marque standard 2T du système de disque Blu-ray.

6. Support de stockage optique selon une des revendications 3 à 5, où le pas transversal de la couche de données (3) de la zone de lecture seule est conforme au système de disque Blu-ray, pour lire les données de la couche de données (3) avec un phonocapteur Blu-ray à l'aide d'un effet Super-RENS.

7. Support de stockage optique selon une des revendications 1 à 6, où la couche de masque (4) de la zone de lecture seule et la zone de données de la zone enregistrable se composent du même matériau, et où le matériau fusible est AgInSbTe ou GeSbTe.

8. Appareil pour enregistrer et/ou lire des données à partir d'un disque optique selon une des revendications 1 à 7, où l'appareil comprend
une unité de phonocapteur fournissant un faisceau laser pour lire des données à partir de la zone de lecture seule avec la couche de champ proche à super résolution du support de stockage optique, et utilisant ledit faisceau laser pour enregistrer et/ou lire des données sur la couche de données de la zone enregistrable, et
un moyen pour reconnaître une zone de lecture seule sur le disque optique, pour laquelle une intensité de laser suffisante pour utiliser un effet de champ proche à super résolution doit être fournie, et
un moyen pour reconnaître une zone enregistrable sur le disque optique, la zone enregistrable comprenant une couche comportant une structure de poursuite pour fournir une information de poursuite, pour écrire des données sur la zone enregistrable avec une densité de données, laquelle est inférieure à la densité de données de la zone de lecture seule.

9. Appareil selon la revendication 8, où l'unité de phonocapteur utilise, pour lire les données de la zone de lecture seule, une intensité de lumière laser suffisante pour lire des données à partir de la zone de lecture seule à l'aide d'un effet de champ proche à super résolution, et utilise une intensité suffisante pour enregistrer des données sur la couche de données de la zone enregistrable.

10. Appareil selon la revendication 8 ou 9, où l'unité de phonocapteur utilise, pour lire les données de la zone de lecture seule, une puissance de lumière laser comprise entre 0,5 et 5 mW, utilise, pour écrire des données sur la zone enregistrable, une puissance de lumière laser comprise entre 1 et 5 mW, et utilise une puissance laser inférieure à 1 mW pour lire des données dans la zone enregistrable, chacune pour une rotation de disque à vitesse unique.

11. Appareil selon la revendication 8, 9 ou 10, où l'unité de phonocapteur comprend un phonocapteur de type disque Blu-ray conforme au système de disque Blu-ray, et où le phonocapteur utilise la même longueur d'onde laser pour les deux zones.
